# EUROPEAN PATENT SPECIFICATION

(11) **EP 2 634 401 B1**
(45) Date of publication and mention of the grant of the patent: **05.11.2014**
(21) Application number: 12157356.2
(22) Date of filing: 28.02.2012
(51) Int. Cl.: F02D 19/10, F02D 41/26

(54) **Control system and method for dual fuel engines**
Steuerungssystem und -verfahren für Zweistoffmotoren
Système et procédé de commande pour moteurs bicarburant

(43) Date of publication of application: 04.09.2013
(73) Proprietor: Caterpillar Motoren GmbH & Co. KG, 24159 Kiel (DE)
(72) Inventor: Ritscher, Bert, 24161 Altenholz (DE); Stazicker, Rodney, Peterborough PE6 7ST (GB)
(74) Representative: Kramer - Barske - Schmidtchen

(56) References cited:
- EP-A1- 2 388 460
- WO-A1-2008/104764
- US-A- 6 073 592
- US-A1- 2002 194 551
- US-A1- 2011 202 256
- US-B2- 6 694 242

## Description

### Technical Field

The present disclosure generally refers to control systems and control methods for dual fuel internal combustion engines and more particularly to maintaining operation of the dual fuel internal combustion engine when a malfunction within an operation mode is detected.

### Background

When controlling internal combustion engines, self-redundant control systems may ensure continuous operation of the internal combustion engines in particular for marine applications. Self-redundant control systems commonly monitor their own functionality as well as the operation of the controlled internal combustion engine.

As an example for a single fuel operated internal combustion engine having multiple cylinder banks, EP 2 388 460 A1 discloses a common rail fuel system with independently controlled fuel supply to each bank. Control modules for each of the cylinder banks are configured to communicate with each other thereby providing a self-redundant control system. Thereby, the control modules are operated as master control modules and slave control modules.

For a dual fuel internal combustion engine, US 6,073,592 discloses a control system comprising a master electronic control module controlling the diesel fuel mode functions, and one or more slave electronic control modules controlling the gaseous fuel functions of the dual fuel engine. The master electronic control module communicating with the one or more slave electronic control modules drives the diesel fuel injectors, processes sensor data required for diesel operation, monitors and protects the engine during diesel operation, starts and stops the engine, and processes operator input. The remaining electronic control functions are allocated among the slave electronic control modules, which include controlling the solenoid gas admission valves. The master electronic control module transitions operation to the liquid fuel mode in the event of a failure of any gaseous fuel mode specific components, or if communication between the master electronic control module and the slave electronic control modules fails. Therefore, operation of the engine may be continued even if one or the entire slave electronic control module fails.

WO 2008/104764 A1 discloses an apparatus for controlling dual fuel supply to a fuel injected engine having an electronic engine management system that supplies a primary injector control signal to each of primary fuel injectors. Furthermore, the apparatus comprises an emulator that emulates the electrical characteristics of a primary injector, and a controller that processes a monitor signal to derive an alternative control signal which is used to control the primary fuel supply or a mixture of the primary fuel and a secondary fuel.

A further example of a control system for a bi-fuel engine is known from US 2011/0202256 A1.

The present disclosure is directed, at least in part, to improving or overcoming one or more aspects of prior systems.

### Summary of the Disclosure

According to an aspect of the present disclosure, a control system for a dual fuel internal combustion engine operable in a liquid fuel mode using a fuel rack actuator for controlling a liquid fuel amount and a gaseous fuel mode using a gaseous fuel admission valve for controlling a gaseous fuel amount comprises a first electronic control module configured to provide a liquid fuel amount control signal to the fuel rack actuator when controlling the liquid fuel mode, and a second electronic control module configured to provide a gaseous fuel amount control signal to the gaseous fuel admission valve when controlling the gaseous fuel mode and configured to provide a back-up liquid fuel amount control signal to the fuel rack actuator when monitoring a malfunction of the liquid fuel amount control signal of the first electronic control module thereby controlling the liquid fuel mode.

According to another aspect of the present disclosure, an internal combustion engine operable in a liquid fuel mode and a gaseous fuel mode comprises a liquid fuel injection system including a main injection system configured to inject liquid fuel during the liquid fuel mode, an ignition injection system configured to inject liquid fuel during the gaseous fuel mode, and a fuel rack actuator configured to control the amount of injected liquid. The internal combustion engine further comprises a gaseous fuel injection system including a gaseous fuel admission valve for mixing gaseous fuel with compressed air, and a control system as disclosed herein.

According to another aspect of the present disclosure, a control method for an internal combustion engine operable in a liquid fuel mode using a fuel rack actuator for controlling a liquid fuel amount and a gaseous fuel mode using a gaseous admission valve for controlling a gaseous fuel amount comprises the steps of providing a liquid fuel amount control signal to the fuel rack actuator when controlling the liquid fuel mode by a first electronic control module, providing a gaseous fuel amount control signal to the gaseous admission valve when controlling the gaseous fuel mode by a second electronic control module and providing a back-up liquid fuel amount control signal to the fuel rack actuator when controlling the liquid fuel mode by the second electronic control module, and when monitoring a malfunction of the liquid fuel amount control signal of the first electronic control module.

In some embodiments, the control system may comprise a monitoring connection line between the first electronic control module and the second electronic control module for monitoring the functionality of the first electronic control module with respect to the liquid fuel amount control signal.

In some embodiments of the control system, the first electronic control module may be further configured to switch the dual fuel internal combustion engine from the gaseous fuel mode into the liquid fuel mode when monitoring a malfunction of the gaseous fuel amount control signal of the second electronic control module.

In some embodiments, the control method may further comprise monitoring the functionality of the first electronic control module and the second electronic control module.

In some embodiments, the control method may further comprise switching the internal combustion engine from the gaseous fuel mode into the liquid fuel mode when monitoring a malfunction of the gaseous fuel amount control signal of the second electronic control module.

Other features and aspects of this disclosure will be apparent from the following description and the accompanying drawings.

### Brief Description of the Drawings

Fig. 1 shows an exemplary schematic diagram of a dual fuel internal combustion engine;
Fig. 2 shows an exemplary block diagram illustrating controlling the dual fuel internal combustion engine of Fig. 1;
Fig. 3 shows a flow diagram illustrating self redundancy with respect to a liquid fuel operation of a dual fuel internal combustion engine; and
Fig. 4 shows a flow diagram illustrating self redundancy with respect to a gaseous fuel operation of a dual fuel internal combustion engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that a dual fuel internal combustion engine may be provided with a self-redundant control system also for the case of failure of an electronic control module for the liquid fuel mode by using an electronic control module for the gaseous fuel mode.

Dual fuel internal combustion engines may be operated with different kinds of fuels like heavy fuel oil (HFO), diesel fuel, gasoline, and natural gas. Specifically, dual fuel internal combustion engines may be operated in either a liquid fuel mode (LFM), for example a diesel fuel mode, and a gaseous fuel mode (GFM), for example a natural gas mode.

For the LFM, a liquid fuel injector system provides liquid fuel to the charged air within a combustion chamber, where the charge air/liquid fuel mixture is ignited by compression.

For the GFM, a gaseous fuel such as natural gas is controllably released into an air intake port connected to a cylinder, producing a charge air/gaseous fuel mixture. After a predetermined period of time, a small amount of diesel fuel also referred to ignition fuel may be injected into the cylinder containing the charge air/fuel mixture. The amount of the ignition fuel may be about 3 % of the fuel amount injected during the LFM. The compression ignites the diesel fuel, which in turn ignites the charge air/gaseous fuel mixture.

To operate LFM as well as GFM, a control system for a dual fuel internal combustion engine may control components of the liquid fuel injector system and the gaseous fuel injector system, including gaseous admission valves and ignition fuel injectors.

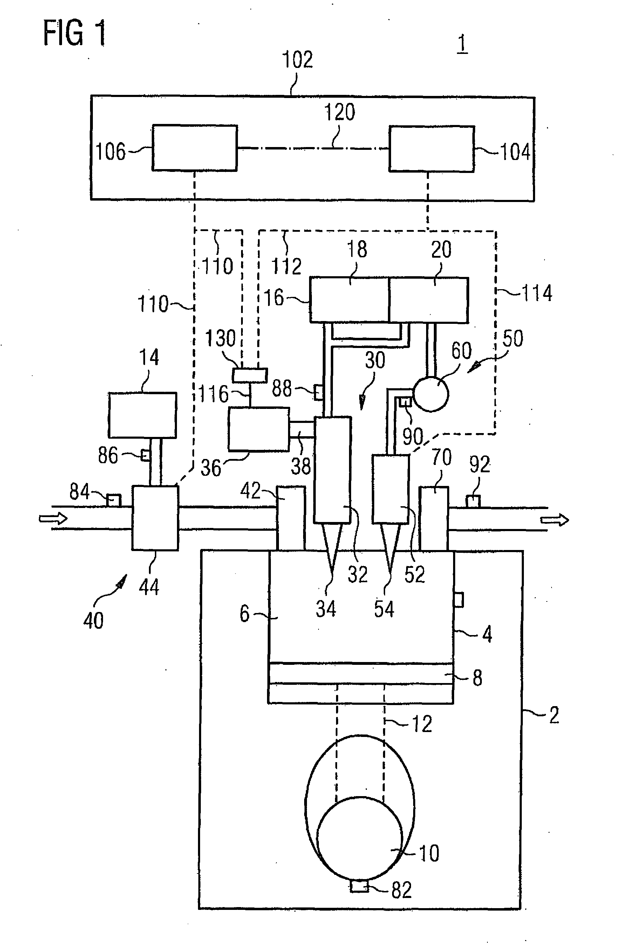

Referring to Fig.1, an exemplary schematic diagram of a dual fuel internal combustion engine 1 including an engine unit, an air system, a fuel system, and a control system is shown.

The engine unit may comprise an engine block 2, at least one cylinder 4 providing at least one combustion chamber 6 for combusting fuel, a piston 8, and a crank-shaft 10 connected to the piston via a piston rod 12. The piston 8 may be configured to reciprocate within the cylinder 4.

The air system may comprise an inlet valve 42 fluidly connected to the at least one combustion chamber 6, and an outlet valve 70 also fluidly connected to the at least on combustion chamber 6. The inlet valve 42 may be configured to enable injection of compressed charge air and/or a mixture of compressed charge air and gaseous fuel into the at least one combustion chamber 6. After combusting the liquid fuel or gaseous fuel, the exhaust may be released out of the at least one combustion chamber 6 via the outlet valve 70 into an associated exhaust gas system (not shown) for treating the exhaust gas.

The fuel system may include a gaseous fuel tank 14 for storing the gaseous fuel, for instance natural gas, and a liquid fuel tank unit 16, which may include a first liquid fuel tank 18 for storing, for example HFO, and a second liquid fuel tank 20 for storing, for example diesel fuel.

The fuel system may further comprise a liquid fuel injection system 30, a gaseous fuel injection system 40, and an ignition fuel injection system 50.

The liquid fuel injection system 30 may be configured to inject liquid fuel originating from the liquid fuel tank unit 16 into the at least one combustion chamber 6. The liquid fuel injector 32 may be supplied with HFO from the first liquid fuel tank 18 or with diesel fuel from the second liquid fuel tank 20.

The liquid fuel injection system 30 may comprise a liquid fuel injector 32 having a liquid fuel injector nozzle 34 fluidly communicating with the at least one combustion chamber 6 and a fuel rack actuator 36 configured to control the amount of liquid fuel provided to the liquid fuel injector 32. The fuel rack actuator 36 may be connected to the liquid fuel injector 32 via a rack 38 for controlling the amount of injected liquid fuel.

The gaseous fuel injection system 40 may be configured to inject gaseous fuel originating from the gaseous fuel tank 14 into the at least one combustion chamber 6. The gaseous fuel injection system 40 may include a gas admission valve 44, for instance a solenoid gas admission valve, which may be arranged upstream of the inlet valve 42 and may be configured to mix gaseous fuel originating from the gaseous fuel tank 14 with compressed charge air. The mixture of gaseous fuel and compressed charge air may be injected into the at least one combustion chamber 6 via the inlet valve 42.

The ignition fuel injection system 50 may be configured to inject a small amount of liquid fuel, preferably diesel fuel, into the at least one combustion chamber 6. The ignition fuel injection system 50 may include an ignition fuel injector 52 having an ignition fuel injector nozzle 54 being in fluid communication with the at least one combustion chamber 6 and a common rail system 60 receiving diesel fuel from the second liquid fuel tank 20 of the liquid fuel tank 16. The ignition fuel injector 52 may be supplied with diesel fuel from the common rail system 60. The common rail system 60 may be embodied by a small sized common rail system known in the art.

In some embodiments, the ignition fuel injection system 50 may be also configured to inject liquid fuel into the at least one combustion chamber 6 during the LFM. This may prevent the ignition fuel injector nozzle 54 from being blocked by, for example, soot resulting from the combusting process.

The control system may comprise a control unit 102 including a first electronic control module (FECM) 104 and a second electronic control module (SECM) 106, and several control lines connected to the respective components of the fuel system. The FECM 104 may be connected to the SECM 106 via a monitoring connection line 120 which may be configured to exchange information between the FECM 104 and the SECM 106 for monitoring each other.

The FECM 104 may be configured to control the LFM of the dual fuel internal combustion engine 1. Specifically, the FECM 104 may be connected to the fuel rack actuator 36 via a connection line 112 and a hardware connection, such as a relay 130.

For instance, the hardware connection may also be embodied by multiple relays 130. Furthermore, the hardware connection may be embodied by a diode or by multiple diodes. Diodes may allow a continuous connection between both ECM and the fuel rack actuator without the need to switchover as described below with respect to the relay 130.

During the LFM, the FECM 104 may provide a liquid fuel amount control signal to the fuel rack actuator 36 via the connection line 112. The liquid fuel amount control signal may indicate a desired liquid fuel amount to be injected into the at least one combustion chamber 6. Furthermore, the liquid fuel amount control signal may further be embodied by a key failure mode. The fuel rack actuator 36 may pivot the rack 38 for adjusting the amount of liquid fuel, for instance HFO originating from the first liquid fuel tank 18 or diesel fuel originating from the second liquid fuel tank 20.

In addition, the FECM 104 may be configured to generally control the dual fuel internal combustion engine 1 such as controlling the engine speed and delivered fuel/power from the engine. Moreover, during the GFM, the FECM 104 may be configured to control the ignition fuel injection system 50 via a connection line 114 as explained below with respect to controlling the GFM with the SECM 106.

The SECM 106 may be configured to control the GFM of the dual fuel internal combustion engine 1. Specifically, the SECM 106 may be connected to the gas admission valve 44 via a connection line 110. Furthermore, the SECM 106 may be connected to the fuel rack actuator 36 via the connection line 110 and the relay 130.

During the GFM, the SECM 106 may provide a gaseous fuel amount control signal to the gaseous admission valve 44 via the connection line 110. The gaseous fuel amount control signal may indicate a desired gaseous fuel amount to be mixed with compressed charge air within the gaseous admission valve 44, which mixture may be injected into the at least one combustion chamber 6. Furthermore, the gaseous fuel amount control signal may be embodied by a key failure mode of the SECM, such as loss of connection to, for instance, the CAN bus system. At the same time, the FECM 104 may provide an ignition fuel amount control signal to the ignition fuel injector 52 via the connection line 114. The ignition fuel amount control signal may indicate a desired ignition fuel amount to be injected into the at least one combustion chamber 6 for igniting the gaseous mixture. For example, the small amount of injected ignition liquid fuel may be about 3 % of the amount of injected liquid fuel during the LFM.

It should be noted that the liquid fuel amount control signal provided by the FECM 104 may be a signal of, for example, 70 V, whereas the gaseous fuel amount control signal provided by the SECM 106 may be a signal of, for example, 108 V.

The control system may further comprise several sensors for receiving actual parameters of the dual fuel internal combustion engine 1. For example, the control system may include a cylinder pressure sensor 80 for sensing the pressure within the at least one combustion chamber 6, a crank shaft speed sensor 82 for measuring the speed of the crank shaft 10, a charge air pressure sensor 84 for measuring the pressure of the compressed charge air, a gaseous fuel pressure sensor 86 for measuring the pressure of the gaseous fuel, a liquid fuel pressure sensor 88 for measuring the pressure of the liquid fuel, a common rail pressure sensor 90 for measuring the pressure of the liquid fuel within the common rail, and an exhaust gas pressure sensor 92 for measuring the pressure of the exhaust gas released out of the at least one combustion chamber 6.

The control system may also comprise further sensors, such as speeding/timing sensors, for which the FECM 104 and the SECM 106 may directly interpret the speed and engine angle information for its own use.

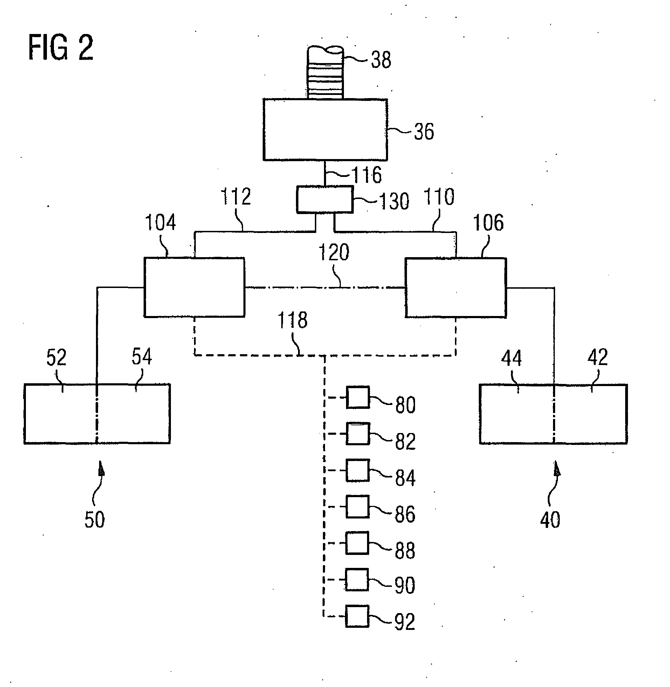

The sensors 80, 82, 84, 86, 88, 90, and 92 may be connected to the control unit 102 via a data link 118 (shown in Fig. 2), for instance a CAN-bus system. Both the FECM 104 and the SECM 106 may be connected to each sensor, for example to receive time critical information and, in order to meet marine regulations, for improving redundancy of the control system. For example, a failure of the CAN link between the FECM 104 and a sensor may not cause the operation of the SECM 106.

The desired amount of liquid fuel and/or gaseous fuel to be injected into the at least one combustion chamber 6 may be determined in accordance with the received parameters from the sensors 80, 82, 84, 86, 88, 90, and 92.

Referring to Fig. 2, the control system of the dual fuel internal combustion engine 1 is shown. As can be seen in Fig. 2, the FECM 104 is connected to the SECM 106 via the monitoring connection line 120 which may be configured to exchange information between the FECM 104 and the SECM 106. Thus, the FECM 104 may be able to monitor the gaseous fuel amount control signal of the SECM 106, and vice versa.

The relay 130 may be configured to transmit the liquid fuel amount control signal either from the FECM 104 or from the SECM 106 to the fuel rack actuator 36 via a connection line 116.

The FECM 104 may be connected to the ignition fuel injection system 50 comprising the ignition fuel injector 52 and the ignition injector nozzle 54, and the SECM 106 may be connected to the gaseous fuel injection system 40 comprising the gas admission valve 44 and the inlet valve 42.

### Industrial Applicability

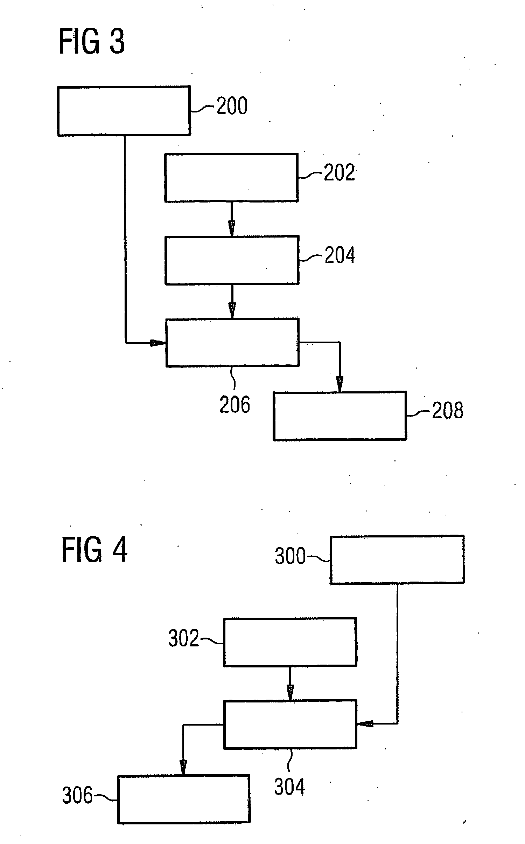

In the following, the operation of the dual fuel internal combustion engine 1 is described in connection with Figs. 3 and 4. Specifically, Fig. 3 relates to a back-up in case of a malfunction of the FECM 104 and Fig. 4 relates to a back-up system in case of a malfunction of the SECM 106.

As shown in Fig. 3, the LFM may be controlled by the FECM 104 (step 200). Continuously, the SECM 106 may monitor the liquid fuel amount control signal provided by the FECM 104 to relay 130 (step 202). The relay 130 may in turn transmit the liquid fuel amount control signal to the fuel rack actuator 36. The SECM 106 may detect a malfunction of the liquid fuel amount control signal provided by the FECM 104 (step 204), for example, the SECM 106 may detect a key failure mode of the FECM 104, such as a loss of connection of the FECM 104 and the CAN bus system. In this case, the SECM 106 may take over control of the LFM (step 206). Therefore, the SECM 106 may provide a back-up liquid fuel amount control signal to the relay 130 which may switchover and may transmit the liquid fuel amount control signal from the SECM 106 to the fuel rack actuator 36. Then, the LFM may be controlled by the SECM 106 (step 208), i.e. the dual fuel internal combustion engine 1 may maintain operation in the LFM.

Referring to Fig. 4, the GFM may be controlled by the SECM 106 (step 300). Continuously, the FECM 104 may monitor the gaseous fuel amount control signal provided by the SECM 106 to the gaseous fuel injection system 40. At the same time, the FECM 104 may provide the ignition fuel amount control signal to the ignition fuel injection system 50 for initiating injection of the ignition fuel for igniting the gaseous mixture within the at least one combustion chamber 6. The FECM 104 may detect a malfunction of the gaseous fuel amount control signal provided by the SECM 106 (step 302). In this case, the FECM 104 may switch the dual fuel internal combustion engine 1 from the GFM into the LFM (step 304), i.e. the LFM may be a back-up mode for the GFM. Thus, the dual fuel internal combustion engine 1 may operate in the LFM controlled by the FECM 104 (step 306).

With respect to Figs. 3 and 4, it may be ensured that the dual fuel engine 1 may be continuously operating even if a malfunction of the control signals provided by one of the ECMs 104, 106 occurs. This may ensure that, for example, a larger ship may drive at all events to the next harbor for having maintenance of the dual fuel internal combustion engine 1.

The liquid fuel amount control signal provided by the FECM 104 may comprise a voltage of 70 V, and the gaseous fuel amount control signal provided by the SECM 106 may comprise a voltage of 108 V. Thus, the SECM 106 providing a higher voltage may take over control of the LFM controlled by the voltage of 70 V.

During both modes the LFM and the GFM, the control unit 102 may receive engine parameters from the sensors 80, 82, 84, 86, 88, 90, and 92 indicative of, for example, the pressure within the at least one combustion chamber 6. The control unit 102 may then provide these parameters to the FECM 104 and the SECM 106 for controlling operation of the respective fuel mode.

For example, if a larger ship comprising a dual fuel internal combustion engine 1 is driving in coastal areas, the dual fuel internal combustion engine may be operated in the GFM due to its lower emissions. However, when driving, for example on the high seas, the dual fuel internal combustion engine 1 may be operated in the LFM.

Furthermore, it should be noted that the control unit 102 may further comprise a third ECM in case controlling a V-type dual fuel engine. It may be understood that the third ECM may control operation of the first cylinder bank, for example the odd numbered cylinders, whereas the FECM 104 may control operation of the second cylinder bank, for example the even numbered cylinders.

The disclosed control system may be used at internal combustion engines of middle to large size. In particular, the dual fuel internal combustion engine 1 may be sized and configured to be used e.g. in vessels, larger ships or in power plants. Dual fuel internal combustion engines of such a size may have a power output of more than 500 kW/cylinder with 12 to 20 cylinders.

In general, dual fuel internal combustion engines may further be embodied by a multi-cylinder bank dual fuel engine, which may be selected from the group of engines consisting of radial engines, opposed engines, V-type engines, in-line engines, and W-type engines.

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Medium speed internal combustion engines may be large stand-alone engines that therefore provide reasonable access to the end sides of the engine block.

Although the preferred embodiments of this invention have been described herein, improvements and modifications may be incorporated without departing from the scope of the following claims.

## Claims

1. A control system for a dual fuel internal combustion engine (1) operable in a liquid fuel mode using a fuel rack actuator (36) for controlling a liquid fuel amount and a gaseous fuel mode using a gaseous fuel admission valve (44) for controlling a gaseous fuel amount, the control system comprising:
a first electronic control module (104) configured to provide a liquid fuel amount control signal to the fuel rack actuator (36) when controlling the liquid fuel mode; and
a second electronic control module (106) configured to provide a gaseous fuel amount control signal to the gaseous fuel admission valve (44) when controlling the gaseous fuel mode and configured to provide a back-up liquid fuel amount control signal to the fuel rack actuator (36) when monitoring a malfunction of the liquid fuel amount control signal of the first electronic control module (104) thereby controlling the liquid fuel mode.

2. The control system of claim 1, further comprising at least one relay (130) connected to the first electronic control module (104), the second electronic control module (106), and the fuel rack actuator (106) for switchover from the liquid fuel mode controlled by the first electronic control module to the liquid fuel mode controlled by the second electronic control module

3. The control system of any one of the preceding claims, further comprising a monitoring connection line (120) between the first electronic control module (104) and the second electronic control module (106) for monitoring the functionality of the first electronic control module (104) with respect to the liquid fuel amount control signal.

4. The control system of any one of the preceding claims,
wherein the first electronic control module (104) is further configured to switch the dual fuel internal combustion engine (1) from the gaseous fuel mode into the liquid fuel mode when monitoring a malfunction of the gaseous fuel amount control signal of the second electronic control module (106).

5. The control system of any one claims 2 to 4, further comprising:
a first control connection line (112) between the first electronic control module (104) and the relay (130);
a second control connection line (110) between the second electronic control module (106) and the relay (130); and
a third control connection line (116) between the relay (130) and the fuel rack actuator (36).

6. An internal combustion engine (1) operable in a liquid fuel mode and a gaseous fuel mode, the internal combustion engine (1) comprising:
a liquid fuel injection system (30) including a main injection system (32) configured to inject liquid fuel during the liquid fuel mode, an ignition fuel injection system (50) configured to inject liquid fuel during the gaseous fuel mode, and a fuel rack actuator (36) configured to control the amount of injected liquid ;
a gaseous fuel injection system (40) including a gaseous fuel admission valve (44) for mixing gaseous fuel with compressed air; and
a control system according to one of the claims 1 to 5.

7. The internal combustion engine (1) of claim 6, wherein the ignition fuel injection system (50) includes a common rail system (60) for injecting an ignition fuel amount during the gaseous fuel mode.

8. The internal combustion engine (1) of claim 7, wherein the ignition fuel injected by the ignition fuel injection system (50) is diesel fuel.

9. The internal combustion engine (1) of claim 7 or claim 8, wherein the liquid fuel injected by the liquid fuel injection system is heavy fuel oil and/or diesel fuel.

10. A control method for an internal combustion engine (1) operable in a liquid fuel mode using a fuel rack actuator (36) for controlling a liquid fuel amount and a gaseous fuel mode using a gaseous fuel admission valve (44) for controlling a gaseous fuel amount, the method comprising:
providing a liquid fuel amount control signal to the fuel rack actuator (36) when controlling the liquid fuel mode by a first electronic control module (104);
providing a gaseous fuel amount control signal to the gaseous fuel admission valve (44) when controlling the gaseous fuel mode by a second electronic control module (106) and
providing a back-up liquid fuel amount control signal to the fuel rack actuator (36) by the second electronic control module (106) when monitoring a malfunction of the liquid fuel amount control signal provided by the first electronic control module (104), thereby controlling the liquid fuel mode by the second electronic control module (106).

11. The control method of claim 10, further comprising:
switchover from the liquid fuel mode controlled by the first electronic control module (104) to the liquid fuel mode controlled by the second electronic control module (106) when monitoring a malfunction of the liquid fuel amount control signal of the first electronic control module (104)

12. The control method of any one of claims 10 to 11, further comprising:
monitoring the functionality of the first electronic control module (104) and the second electronic control module (106).

13. The control method of any one of claims 10 to 12, further comprising:
switching the dual fuel internal combustion engine (1) from the gaseous fuel mode into the liquid fuel mode when monitoring a malfunction of the gaseous fuel amount control signal of the second electronic control module (106).

## Patentansprüche

1. Steuerungssystem für einen Zweikraftstoffverbrennungsmotor (1), der in einem Flüssigkraftstoffmodus unter Verwendung eines Kraftstoffaktuators (36) mit Zahnstange zum Steuern einer Flüssigkraftstoffmenge und in einem Gaskraftstoffmodus unter Verwendung eines Gaskraftstoffeinlassventils (44) zum Steuern einer Gaskraftstoffmenge betreibbar ist, wobei das Steuerungssystem aufweist:
ein erstes elektronisches Steuerungsmodul (104), das zum Bereitstellen eines Flüssigkraftstoffmengensteuerungssignals an den Kraftstoffaktuator (36) mit Zahnstange ausgebildet ist, wenn der Flüssigkraftstoffmodus gesteuert wird, und
einem zweiten elektronischen Steuerungsmodul (106), das zum Bereitstellen eines Gaskraftstoffmengensteuerungssignals an das Gaskraftstoffeinlassventil (44) ausgebildet ist, wenn der Gaskraftstoffmodus gesteuert wird, und zum Bereitstellen eines Notfallflüssigkraftstoffmengensteuerungssignals an den Kraftstoffaktuator (36) mit Zahnstange ausgebildet ist, wenn eine Störung des Flüssigkraftstoffmengensteuerungssignals des ersten elektronischen Steuerungsmoduls (104) beobachtet wird, wodurch es den Flüssigkraftstoffmodus steuert.

2. Steuerungssystem nach Anspruch 1, ferner mit wenigstens einem Relais (130), das mit dem ersten elektronischen Steuerungsmodul (104), dem zweiten elektronischen Steuerungsmodul (106) und dem Kraftstoffaktuator (106) mit Zahnstange zum Umschalten vom Flüssigkraftstoffmodus, der von dem ersten elektronischen Steuerungsmodul gesteuert wird, in den Flüssigkraftstoffmodus, der von dem zweiten elektronischen Steuerungsmodul gesteuert wird.

3. Steuerungssystem nach einem der vorhergehenden Ansprüche, ferner mit einer Überwachungsverbindungsleitung (120) zwischen dem ersten elektronischen Steuerungsmodul (104) und dem zweiten elektronischen Steuerungsmodul (106) zum Überwachen der Funktionalität des ersten elektronischen Steuerungsmoduls (104) bezüglich des Flüssigkraftstoffmengensteuerungssignals.

4. Steuerungssystem nach einem der vorhergehenden Ansprüche, wobei das erste Steuerungsmodul (104) ferner dazu ausgebildet ist, den Zweikraftstoffverbrennungsmotor (1) aus dem Gaskraftstoffmodus in den Flüssigkraftstoffmodus zu schalten, wenn eine Störung im Gaskraftstoffmengensteuerungssignal des zweiten elektronischen Steuerungsmoduls (106) beobachtet wird.

5. Steuerungssystem nach einem der Ansprüche 2 bis 4, ferner mit:
einer ersten Steuerungsverbindungsleitung (112) zwischen dem ersten elektronischen Steuerungsmodul (104) und dem Relais (130),
einer zweiten Steuerungsverbindungsleitung (110) zwischen dem zweiten elektronischen Steuerungsmodul (106) und dem Relais (130), und
einer dritten Steuerungsverbindungsleitung (116) zwischen dem Relais (130) und dem Kraftstoffaktuator (36) mit Zahnstange.

6. Verbrennungsmotor (1), der in einem Flüssigkraftstoffmodus und einem Gaskraftstoffmodus betreibbar ist, wobei der Verbrennungsmotor (1) aufweist:
ein Flüssigkraftstoffeinspritzsystem (30), das ein Haupteinspritzsystem (32), das zum Einspritzen von Flüssigkraftstoff während des Flüssigkraftstoffmodus ausgebildet ist, ein Zündkraftstoffeinspritzsystem (50), das zum Einspritzen von Flüssigkraftstoff während des Gaskraftstoffmodus ausgebildet ist, und einen Kraftstoffaktuator (36) mit Zahnstange aufweist, der zum Steuern der Menge des eingespritzten Flüssigkraftstoffs ausgebildet ist,
einem Gaskraftstoffeinspritzsystem (40), das ein Gaskraftstoffeinlassventil (44) zum Mischen von Gaskraftstoff mit verdickter Luft aufweist, und
ein Steuerungssystem nach einem der Ansprüche 1 bis 5.

7. Verbrennungsmotor (1) nach Anspruch 6, wobei das Zündkraftstoffeinspritzsystem (50) ein Common-Rail-System (60) zum Einspritzen einer Zündkraftstoffmenge während des Gaskraftstoffmodus aufweist.

8. Verbrennungsmotor (1) nach Anspruch 7, wobei der vom Zündkraftstoffeinspritzsystem (50) eingespritzte Zündkraftstoff Dieselkraftstoff ist.

9. Verbrennungsmotor (1) nach Anspruch 7 oder Anspruch 8, wobei der vom Flüssigkraftstoffeinspritzsystem eingespritzte Flüssigkraftstoff Schweröl und/oder Dieselkraftstoff ist.

10. Steuerungsverfahren für einen Verbrennungsmotor (1), der in einem Flüssigkraftstoffmodus unter Verwendung eines Kraftstoffaktuators (36) mit Zahnstange zum Steuern einer Flüssigkraftstoffmenge und in einem Gaskraftstoffmodus unter Verwendung einer Gaskraftstoffeinlassventils (44) zum Steuern einer Gaskraftstoffmenge betreibbar ist, wobei das Verfahren aufweist:
Bereitstellen eines Flüssigkraftstoffmengensteuerungssignals an den Kraftstoffaktuator (36) mit Zahnstange, wenn der Flüssigkraftstoffmodus von einem ersten elektronischen Steuerungsmodul (104) gesteuert wird,
Bereitstellen eines Gaskraftstoffmerigensteuerungssignals an das Gaskraftstoffeinlassventil (44), wenn der Gaskraftstoffmodus von einem zweiten elektronischen Steuerungsmodul (106) gesteuert wird, und
Bereitstellen eines Notfallflüssigkraftstoffmengensteuerungssignals an den Kraftstoffaktuator (36) mit Zahnstange von dem zweiten elektronischen Steuerungsmodul (106), wenn eine Störung des vom ersten elektronischen Steuerungsmodul (104) bereitgestellten Flüssigkraftstoffmengensteuerungssignals beobachtet wird, wodurch der Flüssigkraftstoffmodus vom zweiten elektronischen Steuerungsmodul (106) gesteuert wird.

11. Steuerungsverfahren nach Anspruch 10, ferner mit:
Umschalten aus dem vom ersten elektronischen Steuerungsmodul (104) gesteuerten Flüssigkraftstoffmodus in den vom zweiten elektronischen Steuerungsmodul (106) gesteuerten Flüssigkraftstoffmoduls, wenn eine Störung des Flüssigkraftstoffmengensteuerungssignals des ersten elektronischen Steuerungsmoduls (104) beobachtet wird.

12. Steuerungsverfahren nach einem der Ansprüche 10 bis 11, ferner mit:
Überwachen der Funktionalität des ersten elektronischen Steuerungsmoduls (104) und des zweiten elektronischen Steuerungsmoduls (106).

13. Steuerungsverfahren nach einem der Ansprüche 10 bis 12, ferner mit:
Schalten des Zweikraftstoffverbrennungsmotors (1) aus dem Gaskraftstoffmodus in den Flüssigkraftstoffmodus, wenn eine Störung des Gaskraftstoffmengensteuerungssignals des zweiten elektronischen Steuerungsmoduls (106) beobachtet wird.

## Revendications

1. Système de commande destiné à un moteur à combustion interne bicarburant (1) utilisable dans un mode carburant liquide en utilisant un actionneur de crémaillère d'injection (36) pour commander une quantité de carburant liquide et un mode carburant gazeux en utilisant une soupape d'admission de carburant gazeux (44) pour commander une quantité de carburant gazeux, le système de commande comprenant :
un premier module de commande électronique (104) conçu pour fournir un signal de commande de quantité de carburant liquide à l'actionneur de crémaillère d'injection (36) lors de la commande du mode carburant liquide ; et
un second module de commande électronique (106) conçu pour fournir un signal de commande de quantité de carburant gazeux à la soupape d'admission de carburant gazeux (44) lors de la commande du mode carburant gazeux et conçu pour fournir un signal de commande de quantité de carburant liquide de réserve à l'actionneur de crémaillère d'injection (36) lors de la surveillance d'un mauvais fonctionnement du signal de commande de quantité de carburant liquide du premier module de commande électronique (104) ce qui commande le mode carburant liquide.

2. Système de commande selon la revendication 1, comprenant en outre au moins un relais (130) relié au premier module de commande électronique (104), au second module de commande électronique (106), et à l'actionneur de crémaillère d'injection (106) pour un basculement du mode carburant liquide commandé par le premier module de commande électronique au mode carburant liquide commandé par le second module de commande électronique.

3. Système de commande selon l'une quelconque des revendications précédentes, comprenant en outre une ligne de liaison de surveillance (120) entre le premier module de commande électronique (104) et le second module de commande électronique (106) pour la surveillance de la fonctionnalité du premier module de commande électronique (104) par rapport au signal de commande de quantité de carburant liquide.

4. Système de commande selon l'une quelconque des revendications précédentes, dans lequel le premier module de commande électronique (104) est en outre conçu pour faire passer le moteur à combustion interne bicarburant (1) du mode carburant gazeux au mode carburant liquide lors de la surveillance d'un mauvais fonctionnement du signal de commande de quantité de carburant gazeux du second module de commande électronique (106).

5. Système de commande selon l'une quelconque des revendications 2 à 4, comprenant en outre :
une première ligne de liaison de commande (112) entre le premier module de commande électronique (104) et le relais (130) ;
une deuxième ligne de liaison de commande (110) entre le deuxième module de commande électronique (106) et le relais (130) ; et
une troisième ligne de liaison de commande (116) entre le relais (130) et l'actionneur de crémaillère d'injection (36).

6. Moteur à combustion interne (1) utilisable dans un mode carburant liquide et un mode carburant gazeux, le moteur à combustion interne (1) comprenant :
un système d'injection de carburant liquide (30) comprenant un système d'injection principale (32) conçu pour injecter le carburant liquide durant le mode carburant liquide, un système d'injection de carburant d'allumage (50) conçu pour injecter le carburant liquide durant le mode carburant gazeux, et un actionneur de crémaillère d'injection (36) conçu pour commander la quantité de liquide injecté ;
un système d'injection de carburant gazeux (40) comprenant une soupape d'admission de carburant gazeux (44) pour le mélange du carburant gazeux à de l'air comprimé ; et
un système de commande selon l'une des revendications 1 à 5.

7. Moteur à combustion interne (1) selon la revendication 6, dans lequel le système d'injection de carburant d'allumage (50) comprend un système de rampe commune (60) pour injecter une quantité de carburant d'allumage durant le mode carburant gazeux.

8. Moteur à combustion interne (1) selon la revendication 7, dans lequel le carburant d'allumage injecté par le système d'injection de carburant d'allumage (50) est du carburant diesel.

9. Moteur à combustion interne (1) selon la revendication 7 ou la revendication 8, dans lequel le carburant liquide injecté par le système d'injection de carburant liquide est du mazout lourd et/ou du carburant diesel.

10. Procédé de commande destiné à un moteur à combustion interne (1) utilisable dans un mode carburant liquide en utilisant un actionneur de crémaillère d'injection (36) pour commander une quantité de carburant liquide et un mode carburant gazeux en utilisant une soupape d'admission de carburant gazeux (44) pour commander une quantité de carburant gazeux, le procédé comprenant :
la fourniture d'un signal de commande de quantité de carburant liquide à l'actionneur de crémaillère d'injection (36) lors de la commande du mode carburant liquide par un premier module de commande électronique (104) ;
la fourniture d'un signal de commande de quantité de carburant gazeux à la soupape d'admission de carburant gazeux (44) lors de la commande du mode carburant gazeux par un second module de commande électronique (106) ; et
la fourniture d'un signal de commande de quantité de carburant liquide de réserve à l'actionneur de crémaillère d'injection (36) par le second module de commande électronique (106) lors de la surveillance d'un mauvais fonctionnement du signal de commande de quantité de carburant liquide fourni par le premier module de commande électronique (104), ce qui commande le mode carburant liquide par le second module de commande électronique (106).

11. Procédé de commande selon la revendication 10, comprenant en outre : le passage du mode carburant liquide commandé par le premier module de commande électronique (104) au mode carburant liquide commandé par le second module de commande électronique (106) lors de la surveillance d'un mauvais fonctionnement du signal de commande de quantité de carburant liquide du premier module de commande électronique (104).

12. Procédé de commande selon l'une quelconque des revendications 10 à 11, comprenant en outre :
la surveillance de la fonctionnalité du premier module de commande électronique (104) et du second module de commande électronique (106).

13. Procédé de commande selon l'une quelconque des revendications 10 à 12, comprenant en outre :
le passage du moteur à combustion interne bicarburant (1) du mode carburant gazeux au mode carburant liquide lors de la surveillance d'un mauvais fonctionnement du signal de commande de quantité de carburant gazeux du second module de commande électronique (106).
